# EUROPEAN PATENT APPLICATION

(11) **EP 4 201 212 A1**
(43) Date of publication of application: **28.06.2023**
(21) Application number: 21858400.1
(22) Date of filing: 20.08.2021
(51) Int. Cl.: A21D 13/80, A21C 11/10

(54) **METHOD OF SHAPING COMBINATION FOOD CONTAINING GRANULAR SUBSTANCE**

(30) Priority: 20.08.2020 JP 2020139441
(71) Applicant: Rheon Automatic Machinery Co., Ltd., Utsunomiya-shi, Tochigi 320-0071 (JP)
(72) Inventor: YONEMARU, Masahiro, Utsunomiya-shi, Tochigi 320-0071 (JP)
(74) Representative: Huebner, Stefan Rolf
(86) International application number: PCT/JP2021/030560
(87) International publication number: WO 2022/039257

(57) **Abstract**

A forming method of forming a combined food product containing granulated objects and a food dough comprising steps of (a) discharging a tubular food dough from a discharging device and forming a bottom of the tubular food dough; (b) supplying a predetermined amount of granulated objects to an inside of the tubular food dough formed with the bottom; and (c) cutting the tubular food dough to divide the combined food product filled with the supplied granulated objects. In the step (c), the combined food product is formed so that an upper surface of the granulated objects which are filled is partially and ununiformly covered with the food dough.

## Description

### TECHNICAL FIELD

The present invention relates to a forming method of forming a combined food product or product in which a food dough is combined with granulated objects, such as chocolate chip cookies.

### BACKGROUND ART

Traditionally, there are methods of producing a combined food product in which granulated objects are mixed into a food dough, wherein the granulated objects are, for example, solid oils and fats such as chocolate chips, fruits such as raisins, crushed nuts, or granulated grains, and the food dough is, for example, bread dough or cookie dough. Such a combined food product is produced, for example, by preparing a mixed dough by pre-mixing granulated objects into the food dough, dividing the mixed dough into one with a desired amount by an arbitrary discharging device, and forming and baking the divided mixed dough (Patent Publication 1). There are also manufacturing methods which improve an appearance and texture of the combined food product by reciprocating members such as pins or rotating a disk in the mixed dough to move the granulated objects so that the desired amount of granulated objects are exposed on a surface of the combined food product after baking it (Patent Publication 2).

Further, the maturity of the food market has led to the diversification of consumer preferences for the combined food products mentioned above. One example of this is the tendency to favor products with uneven or rustic appearance, as if they were handmade, rather than products with uniform shapes. For example, patent publication 3 describes that cookie dough mixed with granulated objects in advance is discharged by a discharging device, cut and divided by an ultrasonic cutter at the discharging port, and the surface of the dough piece to be divided is roughened by adjusting the amplitude number of the ultrasonic cutter to give "a home baked appearance."

### PRIOR ART PUBLICATION

Patent Publication 1: Japanese Patent Laid-open Publication No. S62-115231
Patent Publication 2: U.S. Patent No. 4,697,505
Patent Publication 3: U.S. Patent No. 8,431,172

### SUMMARY OF THE INVENTION

### PROBLEM TO BE SOLVED BY THE INVENTION

It is needed that products contain more granulated objects than those in conventional products. However, in a conventional manufacturing method, a proportion of the granulated objects relative to the food dough cannot be increased because causing clogging of the granulated objects in a discharging device can be avoided. For example, in the Patent Publication 1, 35 weight % granulated objects (chocolate) are contained relative to 100 weight % flour. In a chocolate cookie manufactured by using a discharging device, chocolate chips are generally mixed in a range equal to or more than 30 weight % and less than 60 weight % relative to 100 weight % flour, namely, in a range equal to or more than 15 weight % and less than 30 weight % relative to 100 weight % food dough.

Also in the device described in the Patent Publication 2, a proportion of the granulated objects cannot be increased relative to the food dough. Since the granulated objects are exposed on a surface of the product in the Patent Publication 2, an obtained product appears to include more granulated objects than those in the conventional product, and has improved texture. However, since an actual amount of the granulated objects depends on an amount of the granulated objects previously mixed into the food dough, an amount of the granulated objects which is not present on the surface is small relative to the amount of the granulated objects on the surface. If the proportion of the granulated objects in the mixed dough is increased, the granulated objects may be caught by a pin and a disk so that the dough may stay. Thus, it is difficult to increase the proportion of the granulated objects.

Since a device described in the Patent Publication 3 also uses a discharge mechanism, a proportion of the granulated objects in a mixed dough cannot be increased. Further, after the granulated objects are mixed with a food dough, the granulated objects are uniformly distributed in the mixed dough. Thus, even if texture of a surface of a product is made coarse, the granulated objects exposed on the surface of the product would have a uniform appearance covered with the food dough. Thus, it is difficult to obtain appearance which a person can sufficiently recognize as it is handmade.

Therefore, it is an object of the present invention to provide a forming method of forming a combined food product in which the granulated objects are combined with a food dough, and by the method, the proportion of the granulated objects relative to the food dough can be made larger, and/or in which the combined food product has an appearance as if it were handmade.

### MEANS FOR SOLVING THE PROBLEM

The present invention is to solve the above-stated problem, and is directed to a forming method of forming a combined food product containing granulated objects, the forming method including steps of (a) discharging a tubular food dough having a bottom, (b) filling a predetermined amount of a plurality of granulated objects into an inside of the tubular food dough having the bottom, and (c) cutting and dividing the tubular food dough which includes the granulated objects which are filled into pieces, wherein upper surfaces of the granulated objects which are filled are ununiformly covered by a part of the food dough.

In step (c) of the above-stated forming method, a shutter opening may be defined by cutting edges of a plurality of shutter pieces, and the food dough may be cut and divided by closing the shutter opening by using the cutting edges. Further, in the step (c), the tubular food dough may be sealed by a sealing part which is defined by an upper surface of the cutting edge to form a new bottom. Further, upper surfaces of the granulated objects which are filled may be ununiformly covered with the food dough by a scraping part which is defined by a lower surface of the cutting edge. Further, the food dough may be embedded into a gap between the granulated objects which are filled.

Further, in the step (a) of the above-stated forming method, the food dough may be discharged through an annular space defined by a plurality of cylinders concentrically arranged in an overlapping way.

Further, in the step (b) of the above-stated forming method, the granulated objects may be dropped due to their own weights through the innermost cylinder of the plurality of cylinders arranged in the overlapping way to be the granulated objects which are filled.

Further, in the above-stated forming method, the food dough may be a dough which is mixed with the granulated objects.

Further, the forming method may further include a step (d) of pressing the combined food product to force the food dough into a gap between the granulated objects which are filled.

Further, the forming method may further include a step (e) of quick freezing the combined food product.

Further, the present invention is the above-stated combined food product which is formed by using the above-stated forming method.

### EFFECTS OF THE INVENTION

According to the present invention, in comparison with the conventional method, it is possible to make the combined food product contain more granulated objects, and the amount of the granulated objects to be exposed on a surface of the combined food product is easy to adjust, so that the texture and appearance can be improved. Further, by ununiformly arranging food dough on the upper surface of granulated objects exposed on the surface of the combined food product, the combined food product after baking has an unconventional natural appearance as if it were handmade.

### BRIEF DESCRIPTION OF THE DRAWINGS

Fig. 1 is a front view of a forming device used in a forming method according to the present invention.
Fig. 2 is a partially enlarged side view of the forming device used in the forming method according to the present invention.
Fig. 3a is a view showing a process of a first embodiment of the present invention.
Fig. 3b is a view showing a process of the first embodiment of the present invention.
Fig. 3c is a view showing a process of the first embodiment of the present invention.

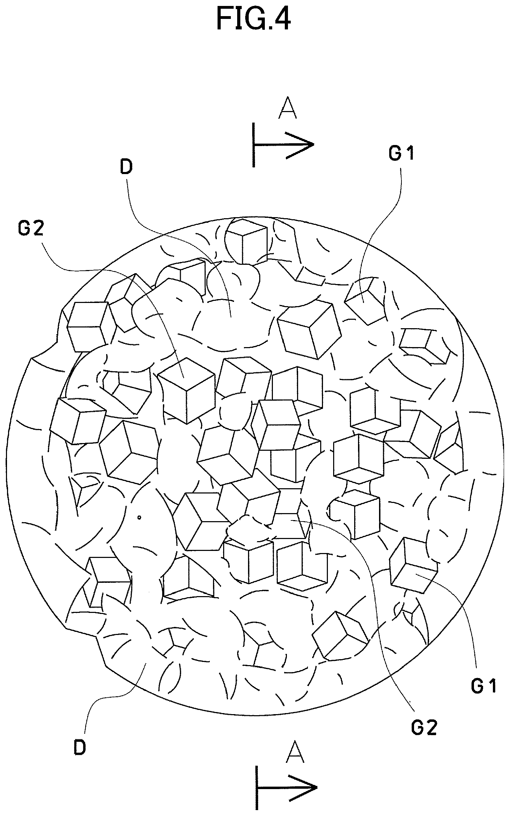

Fig. 4 is a top view of a combined food product after formed according to the first embodiment of the present invention and baked.
Fig. 5 is a photograph showing a state of an upper surface of the combined food product after formed according to the first embodiment of the present invention and baked.
Fig. 6 is a photograph showing a state of a lower surface of the combined food product after formed according to the first embodiment of the present invention and baked.
Fig. 7 is a cross-sectional view along the line A-A in Fig. 4 of the combined food product after formed according to the first embodiment of the invention and baked.
Fig. 8a is a view showing a process of a second embodiment of the present invention.
Fig. 8b is a view showing a process of the second embodiment of the present invention.
Fig. 8c is a view showing a process of the second embodiment of the present invention.

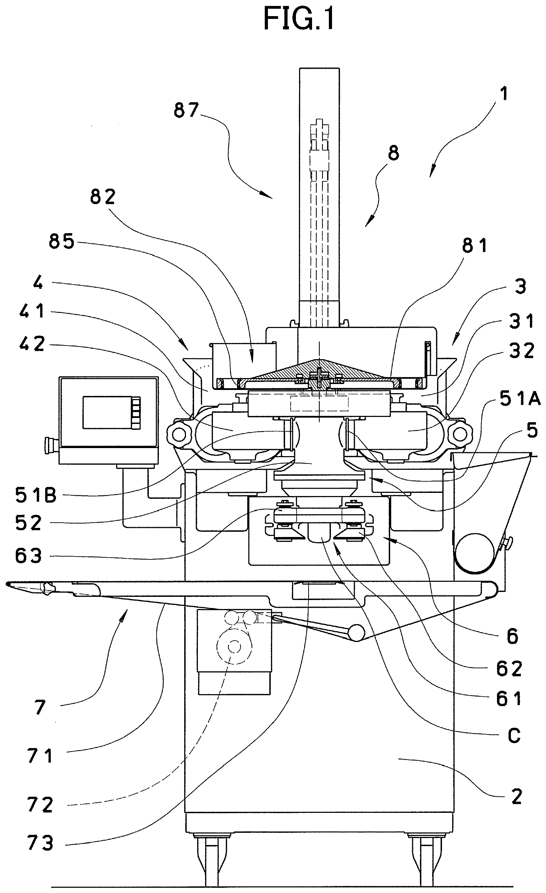

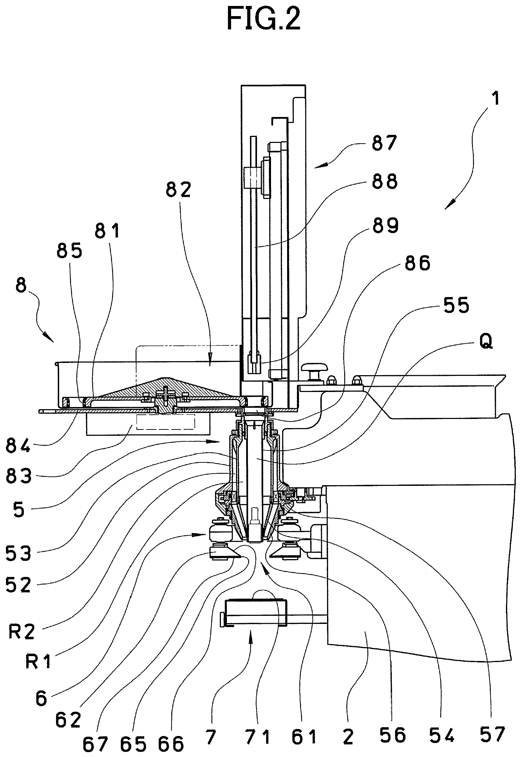

An example of a forming device 1 used in a forming method according to the present invention is shown in Figs. 1 and 2. The forming device 1 includes a base frame 2, an inner material supplying device 3 and an outer skin material supplying device 4 disposed on an upper part of the base frame 2, a combining nozzle 5, a dividing unit 6, and a conveying device 7 disposed on a front side of the base frame 2 (near side in Fig. 1), a central material supplying device 8 disposed above the combining nozzle 5, and a controller (not shown) for controlling a driving action of each device.

The inner material supplying device 3 includes a hopper 31, a screw (not shown) rotatably disposed at a bottom of the hopper 31, and a vane pump 32 disposed on a tip side (downstream side) of the screw, and is configured to supply an inner material F of a food dough D to the combining nozzle 5. The outer skin material supplying device 4 includes a hopper 41, a screw (not shown) rotatably disposed at a bottom of the hopper 41, and a vane pump 42 disposed on a tip side (downstream side) of the screw, and is configured to supply an outer skin material C of the food dough D to the combining nozzle 5. The food dough may be only the outer skin material C (for example, food dough D in the first embodiment and an alternative of the first embodiment explained later) or both of the outer skin material C and the inner material F (for example, food doughs D1, D2 in a second embodiment explained later).

The combining nozzle 5 is disposed between the inner material supplying device 3 and the outer skin material supplying device 4. The combining nozzle 5 includes an outer cylinder 52, an inner cylinder 53 concentrically disposed inside of the outer cylinder 52, a central cylinder 55 concentrically disposed inside of the inner cylinder 53, an inner material nozzle 54, and an outer skin material nozzle 56. The outer cylinder 52 includes a side part which has a connecting port 51A communicating with the inner material supplying device 3, and a connecting port 51B communicating with the outer skin material supplying device 4. The inner cylinder 53 is hollow and includes a lower end part to which the inner material nozzle 54 is threadably attached. The central cylinder 55 defines a passage Q for a central material S (granulated objects). The inner cylinder 53 is disposed to surround the central cylinder 55 so that an annular space R1 between the inner material nozzle 54 and the central cylinder 55 is defined through which the inner material F passes. The outer skin material nozzle 56 is configured to be fitted and secured to the outer cylinder 52 from a lower side of a housing 57. The outer cylinder 52 is disposed to surround the inner cylinder 53 so that an annular space R2 between the outer skin material nozzle 56 and the inner material nozzle 54 is defined through which the outer skin material C passes.

The central material supplying device 8 is detachably disposed on an upper part of the combining nozzle 5. The central material supplying device 8 includes a rotary disk 81, a storage part 82 provided on the rotary disk 81 for the central material S, a driving device 83 for intermittently rotating the rotary disk 81, and a base part 84. The rotary disk 81 includes a plurality of storing holes 85 which are formed through the rotary disk 81 at equal distances. The base part 84 includes an opening 86 concentric with the passage Q of the central cylinder 55 of the combining nozzle 5. The storage part 82 is configured so that the central material S is filled into the storing hole 85 by its own weight, and the rotary disk 81 and the base part 84 are configured so that when the rotary disk 81 is intermittently rotated in one direction by a predetermined angle, the central material S filled in the storing hole 85 is intermittently supplied into the combining nozzle 5 through the opening 86 of the base part 84.

The central material supplying device 8 also includes a pushing device 87 disposed above the rotary disk 81 and the combining nozzle 5. The pushing device 87 includes a rod 88 and a piston 89 threadably secured to a lower end of the rod 88. The piston 89 is configured to be lowered into or raised from an inside of the central cylinder 55 of the combining nozzle 5 through the storing hole 85 of the rotary disk 81 when the rotary disk 81 is stopped without rotating, allowing the central material S supplied into the combining nozzle 5 to be pushed to a lower position of the combining nozzle 5. The rod 88 and the piston 89 are formed to be hollow, and an upper end of the rod 88 is preferably communicated with a compressed air generator (not shown).

The dividing unit 6 includes a plurality of (three or more) shutter pieces 62 which define a shutter opening 61, a driving mechanism 63 for driving the plurality of shutter pieces 62 to open and close the shutter opening 61, and a raising/lowering mechanism 64 for raising and lowering the plurality of shutter pieces 62 below the combining nozzle 5. Each of the plurality of shutter pieces 62 includes a cutting edge 65, an inclined surface extending continuously from the cutting edge 65 toward an upper surface of the shutter piece 62 to function as a sealing part 66, and a flat lower surface of the shutter piece 62 extending continuously from the cutting edge 65 to function as a scraping part 67. A thickness of the cutting edge 65 is preferably small. The dividing unit 6 is configured to divide the combined food product and to also form the combined food product by narrowing the shutter opening 61 to cut the tubular outer skin material C (and the inner material F) discharged from the combining nozzle 5.

The conveying device 7 includes a drive pulley 72, and an endless flat belt 71 wound around the drive pulley 72. The flat belt 71 is configured to be activated (moved) intermittently. The conveying device 7 also includes a receiving member 73 disposed at a location below the combining nozzle 5 and the dividing unit 6. The receiving member 73 is movable upwardly and downwardly and is configured to support a bottom of the divided combined food product via the flat belt 71.

Now, a method of forming a combined food product containing granulated objects and a food dough according to a first embodiment of the present invention will be explained. In the first embodiment, the granulated objects G are distributed to mix-in granulated objects G1 which are mixed into the food dough D, and filling granulated objects G2 which are supplied by the central material supplying device 8 as a central material S. In the first embodiment, the mix-in granulated objects G1 and the food dough D are mixed to obtain a mixed dough, and the mixed dough is supplied from the outer skin material supplying device 4 as an outer skin material C. Thus, a combined food product P1, which includes a single-layer mixed dough and the central material S, is formed.

The food dough D is a cookie dough. The Table 1 shows an example of constituent proportions of the cookie dough, wherein a weight of flour included in the cookie dough is set as 100 weight %.

| Table 1 | | | | |
|---|---|---|---|---|
| flour (all-purpose flour) | 100 weight % | | granulated sugar | 20 weight % |
| powder sugar | 20 weight % | | salt-free butter | 40 weight % |
| shortening | 20 weight % | | whole egg (net amount) | 12 weight % |
| baking soda | 1.5 weight % | | baking powder | 1.5 weight % |
| salt | 0.6 weight % | | | |

The granulated objects G are chocolate chips, each of which is, for example, a cubic product with a side of 8 millimeters. In the following explanations, each of wordings "granulated objects G," "mix-in granulated objects G1," and "filling granulated objects G2" indicates a state in which a plurality of granulated objects collectively have a predetermined amount (quantity). When a weight of the flour included in the food dough D shown in the Table 1 is set as 100 weight %, 110 weight % granulated objects G are included in a combined food product P1. The granulated objects G are equally distributed to 55 weight % mix-in granulated objects G1 and 55 weight % filling granulated objects G2. An amount of the mix-in granulated objects G1 (chocolate chips) is determined so that the forming device 1 can discharge the mixed dough without clogging.

With the above-stated constituent proportions, the Table 2 shows a weight % and a target weight of each constituent (each part) for manufacturing the combined food product P1 which target weight is 90g. The weight of the granulated objects G contained in the combined food product P1 (sum of the weight of the mix-in granulated objects G1 and the weight of the filling granulated objects G2) is approximately 50 weight % with respect to the weight of the food dough D.

| Table 2 | | | | | |
|---|---|---|---|---|---|
| each part | | outer skin material C | | filling granulated objects G2 (central material S) | combined food product P1 |
| | | food dough D | mix-in granulated objects G1 | | |
| weight % | | 215.6 weight % | 55 weight % | 55 weight % | 325.6 weight % |
| target weight | | 60 g | 15 g | 15 g | 90 g |

The food dough D is mixed in a usual way. Then, the mix-in granulated objects G1 are mixed into the food dough D to obtain a mixed dough which is used as the outer skin material C. The outer skin material C is put into the hopper 41 of the outer skin material supplying device 4 and delivered to the combining nozzle 5 via the vane pump 42. Further, the outer skin material C is continuously discharged through the annular space R2 to form a tubular outer skin material C. When the outer skin material C is continuously discharged through the annular space R2, the tubular outer skin material C extends downwardly and reaches the shutter opening 61 of the dividing unit 6. As will be explained in detail later, a bottom CB of the tubular outer skin material C is formed by cutting and sealing the tubular outer skin material C with the cutting edge 65 and the sealing part 66, respectively. Namely, a tip portion of the outer skin material C is made into a bag-like configuration.

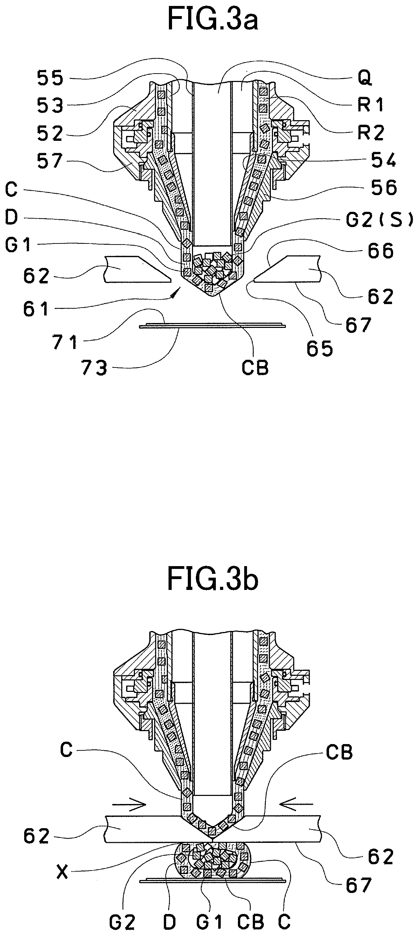

On the other hand, the central material S (chocolate chips), which is the filling granulated objects G2, is put into the storage part 82 of the central material supplying device 8, and a predetermined amount (15g) of the central material S (chocolate chips) is stored in each of the storing holes 85 of the rotary disk 81. When the rotary disk 81 is intermittently rotated and stopped, the central material S is dropped through the opening 86 to the inside of the central cylinder 55 of the combining nozzle 5 (into the passage Q), so that the inside (interior) of the tip portion of the tubular outer skin material C is filled with the central material S (Fig. 3a).

A controller (not shown) receives a signal which indicates an operation of the central material supplying device 8, and activates the dividing unit 6 and the conveying device 7. Concretely, the plurality of shutter pieces 62 are raised to a position where the tip (lower end) portion of the tubular outer skin material C can be formed into the combined food product P1. At the same time, the receiving member 73 is raised to a position near the lower surface of the shutter piece 62 to support the bottom CB of the tip portion of the tubular outer skin material C. Then, the controller (not shown) allows a cutting action of the tubular outer skin material C to be started by activating the shutter pieces 62 in a closing direction to narrow the shutter opening 61 while the plurality of shutter pieces 62 are lowered.

By narrowing the shutter opening 61, the cutting edges 65 of the shutter pieces 62 are brought into contact with an outer periphery of the tubular outer skin material C. A vertical position where the cutting edge 65 is brought into contact with the tubular outer skin material C will be referred to as a cutting start position X. The cutting start position X is set so that it is substantially the same as a vertical position of an upper surface of the central material S (filling granulated objects G2) filled in the tip portion of the outer skin material C. When the shutter opening 61 is further narrowed and the cutting edges 65 are further moved toward the center of the shutter opening 61, the outer skin material C upstream of the shutter pieces 62 is gathered toward the center of the shutter opening 61 while it is supported by an inclined surface (sealing part 66) extending continuously from the cutting edge 65 toward the upper surface of the shutter piece 62. The outer skin material C is gathered by the sealing part 66 until the shutter opening 61 is completely closed. When the shutter opening 61 is completely closed, a tip portion of the tubular outer skin material is sealed by the sealing part 66 to form the bottom CB, namely, close the tip portion in a bag-like configuration (Fig. 3b).

On the other hand, while the shutter opening 61 is narrowed, the outer skin material C downstream of the shutter pieces 62 is adhered to the lower surfaces of the shutter pieces 62 (scraping parts 67) due to its own adhesion, and moved toward the center of the shutter opening 61. Since the scraping part 67 is the lower surface of the shutter piece 62 continuously extending from the cutting edge 65 at the cutting start position X, the outer skin material C, which is being moved toward the center of the shutter opening 61 by the scraping part 67, is caught by the central material S (filling granulated objects G2) and separated from the scraping parts 67. This allows the outer skin material C to be partially left on the upper surface of the central material S (filling granulated objects G2). Or, by moving the scraping part 67 to scrape the surface of the central material S, the outer skin material S is embedded into gaps between the discrete filling granulated objects G2. Further, it is preferable that the scraping part 67 allows the mix-in granulated objects G1 included in the outer skin material C to be moved (rolled) toward the center of the shutter opening 61. As a result, the discrete filling granulated object G2 can be exposed on a surface of the combined food product P1 (Fig. 3b).

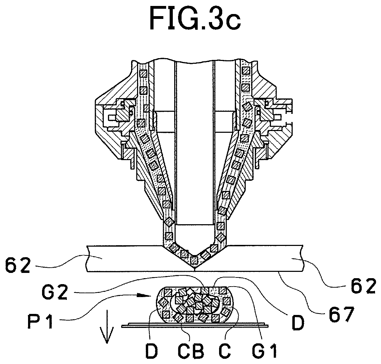

Further, since the scraping part 67 is a flat surface, a force of the scraping part 67 for holding the outer skin material C is weaker than a force of the sealing part 66 for holding the outer skin material C. Thus, before the shutter opening 61 is completely closed, the entire outer skin material C adhering to the scraping parts 67 can be separated, and the central material S (filling granulated objects G2) is not completely covered by the outer skin material C. Further, since the separation of the outer skin material C and the movement of the mix-in granulated objects G1 depend on a state of the central material S (filling granulated objects G2) and a state of the outer skin material C to be cut, the food dough D covering on the upper surface of the central material S, and the mix-in granulated objects G1 are ununiform, and a pattern formed on the surface of the combined food product P1 is not regular. Further, the pattern of the combined food product P1 is different for each forming action of the combined food product P1, and thus, the combined food products P1 have different appearances (Fig. 3c).

While the shutter opening 61 is narrowed, the receiving member 73 is lowered at the same speed as the plurality of shutter pieces 62 to keep a distance between the receiving member 73 and the shutter pieces 61 constant. Thus, until the shutter opening 61 is completely closed, by moving the scraping part 67 of the shutter pieces 62 toward the center of the shutter opening 61 so that the scraping part 67 closely attaches to the upper surface of the central material S (filling granulated objects G2) (partially, the adhered outer skin material C is sandwiched between the scraping part 67 and the filling granulated objects G2.), the outer skin material C is separated from the scraping part 67 due to resistance of the upper surface of the central material S (filling granulated objects G2). Then, when the shutter opening 61 is enlarged, that is, after the outer skin material C is cut and the combined food product P1 is divided and formed, it is preferable to move the receiving member 73 away from the shutter pieces 61 to prevent the ununiformly-formed surface of the combined food product P1 from being uniformed by the scraping part 67.

Then, the divided combined food product P1 is conveyed to a downstream device by the conveying device 7. The downstream device is, for example, a stamping device (not shown). The upper surface of the combined food product P1 is pressed by the stamping device (not shown) to firm a state (shape) in which the central material S (filling granulated objects G2) is ununiformly covered with the food dough D. Further, the food dough D, which is ununiformly present on the upper surface of the combined food product P1, is forced between the discrete filling granulated objects G2 to cause dispersion of the discrete granulated objects G which are exposed on the upper surface of the combined food product P1. As a result, texture of the combined food product P1 is enhanced as if it were handmade. The combined food product P1 in this state may be quick frozen to market it as a frozen product. The combined food product P1 may be frozen without pressing it in a production plant to store and transport the frozen combined food product P1, and after that, the combined food product P1 may be thawed, manually pressed, baked, and sold at each store. Further, any additional toppings may be put.

With the forming method of the combined food product P1 according to the first embodiment of the present invention, by distributing the granulated objects G to the mix-in granulated objects G1 and the filling granulated objects G2, it is possible to obtain a combined food product containing a higher proportion of the granulated objects G than that using conventional methods by which a discharging device may be clogged. In the first embodiment, the combined food product P1 in which approximately 50 weight % granulated objects G is contained with 100 weight % food dough D can be obtained, and this proportion is greatly higher than the above-stated conventional proportion (approximately equal to or more than 15 weight % and less than 30 weight %). The distribution proportion of the mix-in granulated objects G1 and the filling granulated objects G2 in the granulated objects G is arbitrary within a range that does not cause clogging of the food dough D in the discharging device due to the mix-in granulated objects G1.

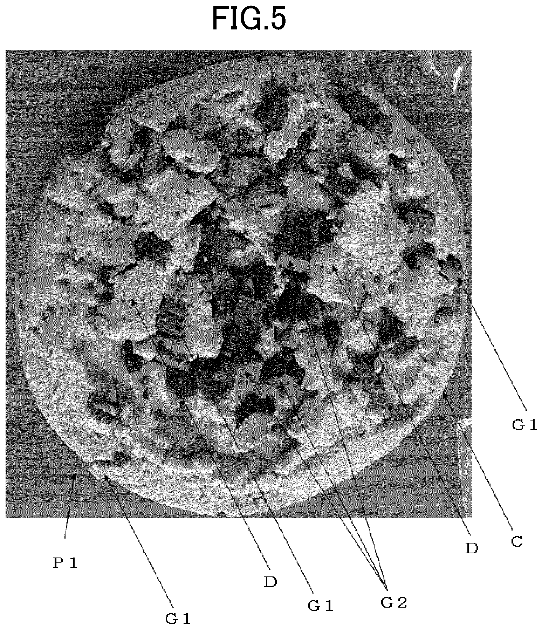

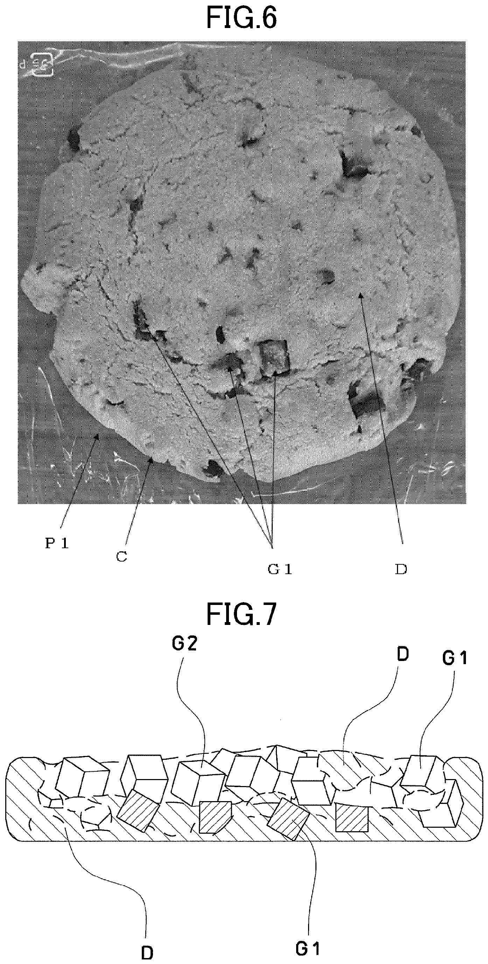

Further, density fluctuation (crude and dense densities) of the granulated objects G relative to the combined food product P1 is caused. Namely, the mix-in granulated objects G1 included in the outer skin material C are scattered in the food dough D, while the filling granulated objects G2, which are the central material S, are concentrated at the central part of the combined food product P1. Further, as explained before, the upper surface of the filling granulated objects G2 (the surface of the combined food product P1) is ununiformly covered with the food dough D. Thus, when the combined food product P1 is baked, distances between the discrete granulated objects G may be expanded due to the puffed or dissolved food dough D, and the food dough D which ununiformly covers the filling granulated objects G2 is impregnated between them. This allows the granulated objects G to be exposed more on the surface of the combined food product P1, so that it is possible to obtain a product which has excellent flavor and texture and natural appearance like a handmade product (See Figs. 5 and 6).

Next, an alternative forming method of the first embodiment of the present invention will be explained. Since the forming device 1 used in this alternative is the same as the forming device 1 explained in the first embodiment, its detailed explanation is omitted. In this alternative, the granulated objects G are sugarcoated almonds, and the entire amount of the granulated objects G are defined by the filling granulated objects G2 supplied as the central material S. That is, unlike the first embodiment, the granulated objects G is not distributed to the mix-in granulated objects G1 to be mixed into the food dough D. Food dough D is a cookie dough, and the Table 3 shows an example of constituent proportions of the cookie dough, wherein a weight of flour (all-purpose flour and entire wheat flour) included in the cookie dough (food dough D) is set as 100 weight%.

| Table 3 | | | | |
|---|---|---|---|---|
| flour (all-purpose flour) | 100 weight % | | salt | 0.6 weight % |
| flour (whole-wheat flour) | 30 weight % | | granulated sugar | 20 weight % |
| powder sugar | 20 weight % | | salt-free butter | 40 weight % |
| shortening | 23 weight % | | whole egg (net amount) | 10 weight % |
| baking soda | 1.5 weight % | | baking powder | 2 weight % |

The sugarcoated almonds, which is the central material S, are made by drying almonds after crushed and sugarcoated, and, for example, are an ununiform product with a size of a piece of about 5-10 millimeters. When a weight of the flour (all-purpose flour and entire wheat flour) included in the food dough D shown in the Table 3 is set as 100 weight %, 80 weight % granulated objects G (the central material S) is contained in the combined food product P2. With the above-stated constituent proportions, the Table 4 shows a weight % and a target weight of each constituent (each part) for manufacturing the combined food product P2 which target weight is 70 g. The weight of the granulated objects G (filling granulated objects G2) included in the combined food product P2 is approximately 37 weight % with respect to the weight of the food dough D.

| Table 4 | | | | |
|---|---|---|---|---|
| each part | | food dough D | filling granulated objects G2 (central material S) | combined food product P2 |
| weight % | | 217.1 weight % | 80 weight % | 297.1 weight % |
| target weight (g) | | 51g | 19 g | 70 g |

The food dough D is mixed in a usual way and used as the outer skin material C. The outer skin material C is put into the outer skin material supplying device 4, delivered to the combining nozzle 5, and continuously discharged through the annular space R2 to form a tubular outer skin material C. When the outer skin material C is continuously discharged through the annular space R2, a tip portion of the tubular outer skin material C extends downwardly and reaches the shutter opening 61 of the dividing unit 6. The tubular outer skin material C is cut by the cutting edges 65 and sealed by the sealing parts 66 so that the tip portion of the tubular outer skin material C is made into a bag-like configuration.

On the other hand, the central material S (sugarcoated almonds) is put into the storage part 82 of the central material supplying device 8. 80 weight % central material S (filling granulated objects G2, which is the entire granulated objects G) with respect to 100 weight % flour, namely, a predetermined amount (19g) of the central material S, is stored in each of the storing hole 85 of the rotary disk 81. When the rotary disk 81 is intermittently rotated and stopped, the central material S is dropped through the opening 86 to the inside of the central cylinder 55 of the combining nozzle 5 (inside of the passage Q), and then, the inside (interior) of the tip portion of the tubular outer skin material C is filled with the central material S.

While the central material S drops, the piston 89 of the central material supplying device 8 is lowered into the passage Q to force and attach the central material S to the inside (interior) of the tip portion of the tubular outer skin material C discharged (extruded) through the combining nozzle 5 and to prevent the central material S from remaining in the storing hole 85 and the combining nozzle 5. After the central material S is filled by the piston 89, compressed air is delivered (supplied) into and discharged from the rod 88 immediately before the piston 89 is raised, so that the piston 89 is prevented from raising with the central material S which attaches the piston 89.

A controller (not shown) receives a signal which indicates an operation of the central material supplying device 8, and activates the cutting action of the outer skin material C and the dividing and forming actions of the combined food product P2. Since the cutting and dividing actions in this alternative are the same as those in the first embodiment, their detailed explanations are omitted.

Like the first embodiment, the outer skin material C which is being moved toward the center of the shutter opening 61 by the scraping part 67 is caught by the central material S, and this allows the outer skin material C to be partially left on the upper surface of the central material S (filling granulated objects G2). Or, by moving the scraping part 67 to scrape the upper surface of the central material S, the outer skin material S is embedded into gaps between the discrete filling granulated objects G2. As a result, on the surface of the combined food product P2 divided by the cutting edges 65 of the shutter pieces 62, the food dough D which is covered on the upper surface of the central material S is ununiform. In a downstream process, liquid such as egg liquid and sugar liquid may be applied to a surface of the combined food product P2 and the combined food product P2 may be baked. With the forming method of the combined food product P2 according to the alternative of the first embodiment, it is possible to obtain the combined food product P2 containing a high proportion of the granulated objects G, which is difficult to be realized with conventional methods. Such combined food product P2 has a novel food texture and a rustic appearance in which the upper surfaces of the granulated objects G (central material S) are ununiformly covered with the food dough D.

Next, a forming method of a second embodiment of the present invention will be explained. While in the first embodiment, the single-layer tubular food dough D including only the outer skin material C is discharged, in the second embodiment, an inner material F is supplied by the inner material supplying device 3 in addition to the outer skin material C so that a multi-layer tubular food dough D (D1, D2) is discharged. Thus, a combined food product P3 including the outer skin material C, the inner material F and the central material S is formed. Since the forming device 1 used in the second embodiment is the same as the forming device 1 explained in the first embodiment, its detailed explanation is omitted.

The food dough D1 used for the outer skin material C of the second embodiment is a cookie dough, and its constituent proportions are the same as those shown in the Table 1. The food dough D2 used for the inner material F in the second embodiment is also a cookie dough, but it is preferable to add flavor by matcha (green tea powder). The Table 5 shows an example of constituent proportions of the food dough D2 (cookie dough), wherein a weight of flour included in the food dough D1 is set as 100 weight %.

| Table 5 | | | | |
|---|---|---|---|---|
| flour (all-purpose flour) | 70 weight % | | granulated sugar | 14 weight % |
| powder sugar | 14 weight % | | salt-free butter | 30 weight % |
| shortening | 14 weight % | | whole egg (net amount) | 8 weight % |
| baking soda | 1 weight % | | baking powder | 1 weight % |
| salt | 0.4 weight % | | matcha | 3 weight % |

The granulated objects G are matcha chocolate chips, each of which is, for example, a cubic product with a side of 8 millimeters. When a weight of the flour included in the food dough D1 is set as 100 weight %, 160 weight % granulated objects G (matcha chocolate chips) are included in the combined food product P3. With the above-stated constituent proportions, the Table 6 shows a weight % and a target weight of each constituent (each part) for manufacturing the combined food product P3 which target weight is 120 g. The weight of the granulated objects G included in the combined food product P3 (the sum of the weight of the mix-in granulated objects G1 and the weight of the filling granulated objects G2) is approximately 43 weight % with respect to the weight of the food dough D (the sum of the weight of the food dough D 1 and the weight of the food dough D2).

| Table 6 | | | | | |
|---|---|---|---|---|---|
| each part | outer skin material C | | inner material F (food dough D2) | filling granulated objects G2 (central material S) | Combined food product P3 |
| | food dough D1 | mix-in granulated objects G1 | | | |
| weight % | 215.6 weight % | 55 weight % | 155.4 weight % | 105 weight % | 531 weight % |
| target weight | 49 g | 12 g | 35 g | 24 g | 120 g |

The food dough D1 is mixed in a usual way. After the food dough D1 is mixed, the mix-in granulated objects G1 are mixed into the food dough D1 to obtain a mixed dough, which is used as the outer skin material C. Further, the food dough D2 is mixed in a usual way and used as the inner material F. The outer skin material C is put into the hopper 41 of the outer skin material supplying device 4 and delivered to the combining nozzle 5 via the vane pump 42. Further, the inner material F is put into the hopper 31 of the inner material supplying device 3 and delivered to the combining nozzle 5 via the vane pump 32. The outer skin material C is continuously discharged through the annular space R2 to be made tubular, while the inner material F is continuously discharged through the annular space R1 to be made tubular. Then, two-layer tubular dough (the outer skin material C and the inner material F) is discharged by discharging the inner material F and the outer skin material C in a mutually combined state.

On the other hand, the central material S, which is the filling granulated objects G2, is put into the storage part 82 of the central material supplying device 8, and a predetermined amount (24g) of the central material S is stored in each of the storing holes 85 of the rotary disk 81. When the rotary disk 81 is intermittently rotated and stopped, the central material S is dropped through the opening 86 to the inside of the central cylinder 55 of the combining nozzle 5 (into the passage Q), so that the inside (interior) of the tip portion of the two-layer tubular food dough D is filled with the central material S.

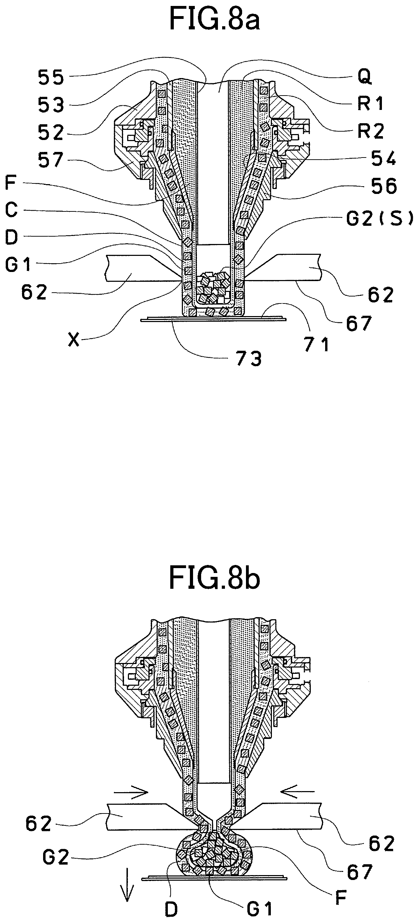

Next, by using the plurality of shutter pieces 62, the cutting action of the outer skin material C and the inner material F and dividing and forming actions of a combined food product P3 are performed. Although in the first embodiment, the cutting start position X is set so that it is substantially the same as the vertical position of the upper surface of the central material S (filling granulated objects G2) filled inside (interior) of the tip portion of the outer skin material C, in the second embodiment, it is set below the vertical position of the upper surface of the filling granulated objects G2 (Fig. 8a).

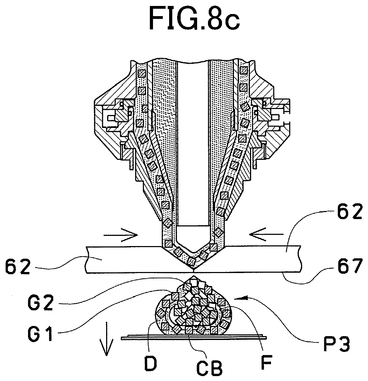

While the shutter opening 61 is narrowed, the receiving member 73 is lowered at a speed slightly faster than that of the plurality of shutter pieces 62. As the shutter opening 61 is closed, the combined food product P3 is formed so that the outer skin material C, the inner material F, and the central material S (filling granulated objects G2) are raised toward the center of the combined food P3 by the scraping parts 67 of the shutter pieces 62 (Fig. 8b). Before the shutter opening 61 is completely closed, the scraping part 67 is moved away from the combined food product P3 which is being divided (Fig. 8c).

Since the surface of the combined food product P3 after it is formed has a hill configuration in which the level is raised toward the center, it is theoretically possible to increase an exposed area of the central material S (filling granulated objects G2) relative to an entire surface area of the combined food product P3 larger than that in the combined food product P1 in the first embodiment. In the combined food product P3, since the inner material F and the outer skin material C ununiformly cover on the upper surface of the central material S (filling granulated objects G2), the dense central material S (filling granulated objects G2) is exposed from the inner material F and the outer skin material C which ununiformly cover, and also, the mix-in granulated objects G1 included in the outer skin material C may be exposed on the surface of the combined food product P3. When the combined food product P3 is pressed by a stamping device (not shown) or by hand to flatten it and baked, density fluctuation (crude and dense densities) of the granulated objects G relative to the combined food product P3 is caused due to the puffed or dissolved food dough D, so that it is possible to obtain a product with novel and natural appearance. Further, it is possible to obtain a combined food product P3 which has novel texture and appearance and in which more granulated objects G are exposed on the surface.

The embodiments of the present invention have been explained, but the present invention is not limited to them, and various modifications can be made within the gist and purpose of the claims. For example, the inclination of the sealing part of the shutter piece and the vertical thickness of the cutting edge may be arbitrarily changed. Further, the scraping part may include a slightly inclined portion or a groove or may be dimpled so that the appearance of the combined food product may be changed. Further, the pushing device 87, which is operated in the alternative of the first embodiment, may be operated in the first and second embodiments. Further, the constituent proportions of the granulated objects, the outer skin material, the inner material, and the central material are not limited to those explained above, and various combination thereof is possible.

1: forming device
2: base frame
3: inner material supplying device
31: hopper
32: vane pump
4: outer skin material supplying device
41: hopper
42: vane pump
5: combining nozzle
51: connecting port
52: outer cylinder
53: inner cylinder
54: inner material nozzle
55: central cylinder
56: outer skin material nozzle
57: housing
6: dividing unit
61: shutter opening
62: shutter piece
63: driving mechanism
64: raising/lowering mechanism
65: cutting edge
66: sealing part
67: scraping part
7: conveying device
71: flat belt
72: drive pulley
73: receiving member
8: central material supplying device
81: rotary disk
82: storage part
83: driving device
84: base part
85: storing hole
86: opening
87: pushing device
88: rod
89: piston
Q: passage
R1: annular space
R2: annular space
G granulated objects
G1: mix-in granulated objects
G2: filling granulated objects
D, D1, D2: food dough
C: outer skin material
F: inner material
P1, P2, P3: combined food product

## Claims

1. A forming method of forming a combined food product containing granulated objects and a food dough comprising steps of:
(a) discharging a tubular food dough from a discharging device and forming a bottom of the tubular food dough;
(b) supplying a predetermined amount of granulated objects to an inside of the tubular food dough formed with the bottom; and
(c) cutting the tubular food dough to divide a combined food product filled with the supplied granulated objects;
wherein in the step (c), the combined food product is formed so that an upper surface of the granulated objects which are filled is partially and ununiformly covered with the food dough.

2. The forming method according to claim 1, further comprising a step of providing cutting edges of a plurality of shutter pieces to define a shutter opening, and
wherein in the step (c), by closing the shutter opening defined by the cutting edges, the tubular food dough is cut, and the combined food product is divided.

3. The forming method according to claim 2, further comprising a step of providing sealing parts of the plurality of shutter pieces, and
wherein in the step (c), when the shutter opening is closed, the tubular food dough is sealed by the sealing parts to form a bottom in the step (a) for a combined food product which is formed next.

4. The forming method according to claim 3, further comprising a step of providing a scraping part of the plurality of shutter pieces, and
wherein in the step (c), when the shutter opening is closed, the upper surface of the granulated objects which is filled is ununiformly covered with the food dough by the scraping part.

5. The forming method according to claim 1,
wherein the discharging device includes an annular space defined between a plurality of cylinders which are concentrically arranged in an overlapping way, and
wherein in the step (a), the tubular food dough is discharged through the annular space.

6. The forming method according to claim 5,
wherein in the step (b), the granulated objects are dropped due to their own weights through the innermost cylinder of the plurality of cylinders concentrically arranged in the overlapping way to supply the granulated objects.

7. The forming method according to claim 1,
wherein in step (c), the food dough is embedded into a gap between the discrete granulated objects located on the upper surface of the granulated objects which are filled.

8. The forming method according to claim 1,
wherein the food dough is a mixed dough into which the granulated objects are mixed.

9. The forming method according to claim 1, further comprising a step (d) of pressing the combined food product which is formed to force the food dough between the discrete granulated objects which are filled.

10. The forming method according to claim 1, further comprising a step (e) of quick freezing the combined food product which is formed.

11. A combined food product which is formed by using the forming method according to any one of claims 1-10.
